# EUROPEAN PATENT APPLICATION

(11) **EP 2 682 218 A1**
(43) Date of publication of application: **08.01.2014**
(21) Application number: 12075081.5
(22) Date of filing: 04.07.2012
(51) Int. Cl.: B23K 20/06, F28F 9/18, F16L 41/08

(54) **A method for fastening pipes in a plate**

(71) Applicant: Bloksma B.V., 1332 AB Almere (NL)
(72) Inventor: Gommers, Erik Paulus, 1319 DJ Almere (NL)
(74) Representative: Klavers, Cornelis

(57) **Abstract**

A description is given of a method wherein end portions of tubes (4) are secured in through openings (2) in a plate by, for example, inserting the end portion (3) of the tube (4) into the opening on one side of the plate. Subsequently, an EMP probe (7) is inserted into the tube (3), through said opening which extends for example to the opposite side of the plate, until the probe is inside the end portion of the tube situated in the plate, and an electromagnetic pulse is applied to the EMP probe (7), causing the tube end portion situated in the plate, which tube is made of a material in which eddy currents can be induced, to expand, thereby bringing about plastic deformation. As a result, said end portion is permanently secured in the opening in the plate and, if necessary, the projecting portion of the tube is cut off.

## Description

The present invention relates to a method of securing tubes in openings in a plate.

The present invention particularly relates to a heat exchanger which is suitable for use, for example but not exclusively, on board of ships, and which is provided with metal-containing tubes-through which a medium to be cooled flows-having end portions, and which heat exchanger is further provided with a plate comprising through openings in which the end portions are secured by applying the method.

According to customary methods, tubes which have previously been thoroughly cleaned at their periphery are secured in openings in a tube plate which have also been thoroughly cleaned by individually mechanically expanding the end portions of the tubes and then optionally welding or soldering said end portions into said openings so as to be secured therein. In practice, this requires, for example, in the manufacture of heat exchangers, that specialised staff perform the same manual operations for many hours in order to form leak-proof connections. Subsequently, in the case of the manufacture of heat exchangers, any excess material of the tubes which projects from the plate as a result of the expansion operation, has to be ground off or cut off, de-burred and removed, which are even more time and attention consuming operations.

It is an object of the present invention to provide an improved method, wherein the number of operations to be performed by specialised staff for securing, in particular, large numbers of tubes to plates in a leak-proof manner are continuously reduced, without, in the case of the manufacture of heat exchangers, welding operations and grinding off of excess tube material being required.

To achieve this, the method according to the invention has the characteristics of claim 1.

An advantage of the method according to the invention resides in that by applying electromagnetic pulses in the way described hereinabove for securing a tube end portion in a through opening in a plate, such as a pipe plate or tube plate, it is no longer necessary to subsequently perform operations in order to finish the connection formed. De-burring or grinding can be dispensed with because the plate or tube is free of projecting excess material or parts of the tube. The connecting method itself can be carried out in less time and by less-skilled personnel, without the quality, predictability, uniformity and eventually the required long-lasting leak-proofness of the connection between the various tube end portions and the plate being adversely affected. In this manner, a mechanically stable, leak-proof fusion weld is formed between tube and tube plate. In addition, the method according to the invention does not require a mould because the plate acts as a mould.

Moreover, it has been found that previous thorough cleaning and degreasing of the periphery of the tube end portions and of the inner periphery of the various through openings in the plate is no longer necessary. The EMP energy exerted in the tube end portion by the EMP probe generates such an expansive force therein that the locally briefly generated high temperature causes any contamination to simply fuse with the connection between the material of the tube periphery and the internal opening.

An embodiment of the method according to the invention is **characterized in that** after a plurality of respective end portions of the tubes have been inserted into respective openings, one or more EMP probes are inserted through said openings into the end portions of the tubes situated in the plate, and electromagnetic pulses are applied to the EMP probes.

This has the advantage that, if necessary, large numbers of connections between tube end portions and through openings in the plate can be provided. This results in a gain of time which can be increased even further by energizing a plurality of EMP probes simultaneously or at brief intervals from one or more EMP supply sources.

Further, detailed, possible embodiments set forth in the remaining claims are mentioned together with the associated advantages in the following description.

Next, in particular the method according to the invention and the heat exchanger according to the invention obtained by means of said method will be explained in greater detail with reference to the accompanying figures, in which corresponding parts are indicated by means of the same reference numerals. In the figures:
Figure 1 shows a plate with an opening in which a tube will be secured by means of the method according to the invention;
Figure 2 shows the tube secured in the opening of the plate of figure 1 by means of the method according to the invention; and

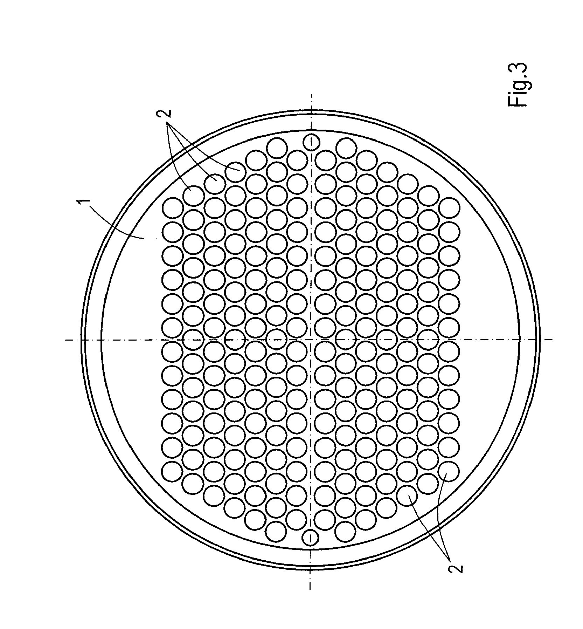

Figure 3 shows an example of a tube plate of a heat exchanger according to the invention.

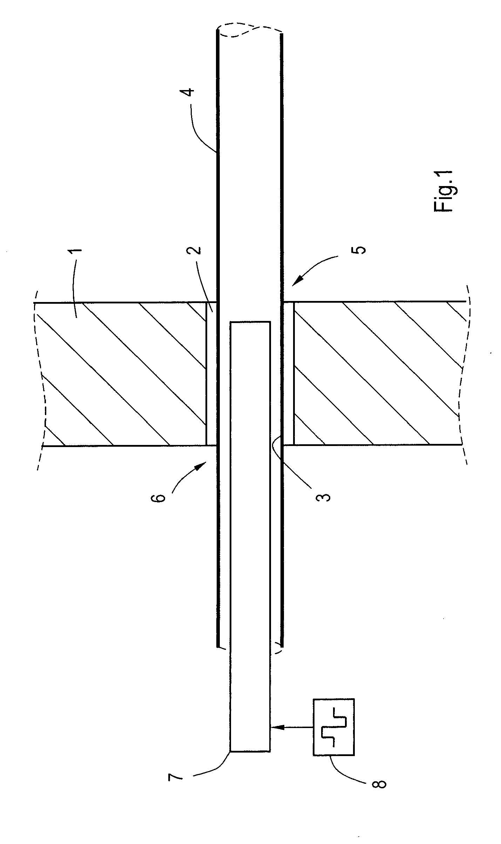

Figure 1 shows part of a plate 1 provided with through openings 2 in which end portions 3 of tubes have to be secured. The end portions 3 of the plate 4 are inserted, as is shown, from one side 5 of the plate into the opening 2. The figure shows that the end portion 3 projects from the opposite side 6 of the plate 4. When a plurality of end portions of a plurality of tubes are passed through a plurality of openings, personnel advantageously can see instantly that all end portions project from the opposite side 6.

At least the tubes 4 are made of a material in which eddy currents can be induced. An EMP coil or probe 7 is inserted, in this case, from the side 6 into the end portion 3 of the tube 4 situated in the plate 1. Subsequently, an electromagnetic pulse, simply referred to as EMP, is supplied from a diagrammatically shown EMP source 8 to the EMP probe 7. As a result, the end portion 3 of the tube situated in the plate and made of the material in which eddy currents are then induced is caused to expand and plastically deform by said EMP.

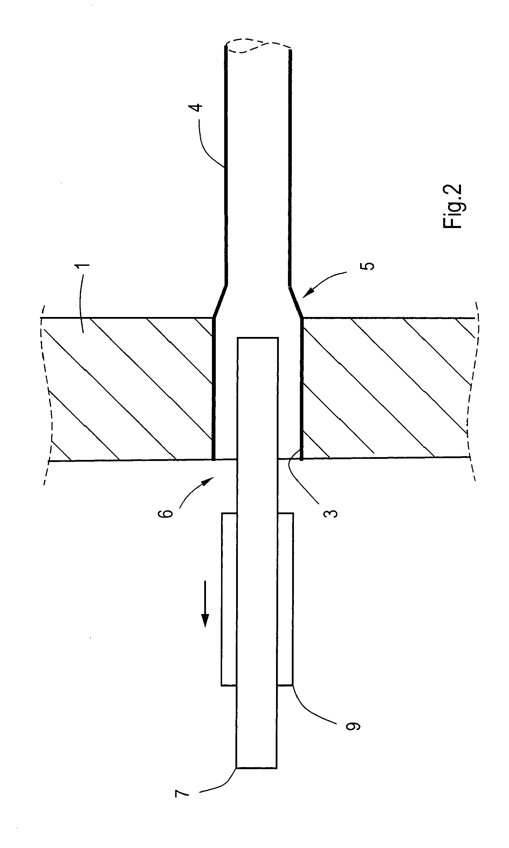

By virtue thereof, as shown in figure 2, the end portion 3 is permanently secured in the opening 2. In the case where said end portion 3 partly projects on the side 6, which is also shown, the part 9 consisting of excess material of the end portion 3 of the tube is advantageously simultaneously cut off by the EMP and can be removed. This cutting off does not involve an additional operation.

In practice, at least the tubes, pipes or conduits 4 are made of coatings or materials, for example metal, such as steel, aluminium or metal alloys, which can be fused by means of electromagnetic energy. Particularly in the case of heat exchangers, said metal of the tubes and/or of the tube plates or pipe plates 1 customarily used in said heat exchangers will contain copper or may even be made entirely of copper, because this additionally is a thermo-conductive metal which is very suitable and generally accepted for this purpose.

The method described hereinabove can be successively applied to further tubes and further openings of, if necessary, the same plate 1. The method also advantageously enables rows or even entire matrices of rows and columns of a plurality of tube end portions to be secured in a corresponding number of openings of, in particular, tube plates as frequently used in heat exchangers. By applying one or, if necessary, more than one EMP probes 7 and energizing them successively or simultaneously from one or more high-power pulse generators 8, which form the EMP supply sources, the method can be applied much more rapidly and the eventual connection becomes more uniform as compared to the prior art.

In practice, the probe 7 as shown in figure 1 can be passed through the end portion 3 from the left-hand side 6 of the plate but of course also from the right-hand side 5 of the plate.

## Claims

1. A method wherein end portions of tubes (4) are secured in through openings (2) in a plate (1) by inserting the end portion (3) of the tube (4) into the opening (2), after which an EMP probe (7) is inserted into the tube (4) until it is inside the end portion (3) situated in the plate (1), and an electromagnetic pulse (EMP) is applied to the EMP probe (7), causing the tube end portion (3) situated in the plate (1), which tube (4) is made of a material in which eddy currents can be induced, to expand, thereby bringing about plastic deformation, as a result of which said end portion (3) is permanently secured in the opening (2) in the plate (1), **characterized in that** the EMP probe (7) also projects outside the opening (2) in the plate (4) causing with the expansion of the end portion situated outside the plate (1) simultaneously a cutting off of the part (9) of the tube (4) situated outside the plate.

2. The method according to claim 1, **characterized in that** the end portions of the tubes are secured in the through openings in the plate by inserting the end portion of the tube into the opening on one side of the plate, after which, the EMP probe is inserted into the tube, through said opening which extends to the opposite side of the plate, until it is inside the end portion of the tube situated in the plate.

3. The method according to any one of claims 1-2, **characterized in that** the method is equally applied to the end portion of a further tube which is also secured in a further through-opening in the plate.

4. The method according to any one of claims 1 to 3, **characterized in that** the method is equally applied to rows of tubes which are secured in through openings in the plate.

5. The method according to any one of claims 1 to 4, **characterized in that** the method is equally applied to a matrix of rows and columns of tubes which are secured in through openings in the plate.

6. The method according to any one of claims 1 to 5, **characterized in that** after a plurality of respective end portions of the tubes have been inserted into respective openings, one or more EMP probes are inserted through said openings into the tube end portions situated in the plate, and electromagnetic pulses are applied to the EMP probes.

7. The method according to claim 6, **characterized in that** the electromagnetic pulses are intermittently applied to the EMP probes.

8. The method according to claim 6 or 7, **characterized in that** the EMP probes are energized from one and the same EMP supply source, generally a high-power pulse generator.

9. The method according to any one of claims 1 to 8, **characterized in that** the plate is a tube plate or pipe plate which forms part of a heat exchanger, such as an oil cooler, water cooler or a bin cooler.

10. The method according to any one of claims 1 to 9, **characterized in that** at least the tubes are made of coatings or materials, for example metal, such as steel, aluminium, copper or metal alloys, which can be fused, by means of electromagnetic energy, with the material of the tube plate.

11. The method according to any one of claims 1 to 10, **characterized in that** an excess part of the tube end portion projecting from the other side of the plate is cut off simultaneously and as a result of the application of the EMP pulse to the EMP probe.

12. The method according to any one of claims 1 to 11, **characterized in that** the tubes and the plate form part of a heat exchanger.

13. A heat exchanger comprising tubes through which and around which, in operation, a medium flows, and which tubes have end portions, and comprising a plate having through openings in which the end portions are secured by means of an EMP pulse applying the method according to any one of the claims 1 to 12, and wherein the end portions projecting from the plate are cut off during application of said method with the help of the same EMP pulse.
